# EUROPEAN PATENT APPLICATION

(11) **EP 2 544 087 A1**
(43) Date of publication of application: **09.01.2013**
(21) Application number: 12006831.7
(22) Date of filing: 09.06.2008
(51) Int. Cl.: G06F 3/14, G06F 15/16

(54) **Sharing a computer display across a network**

(30) Priority: 08.06.2007 US 811056
(62) Divisional of application: 08770531.5
(71) Applicant: MICROSOFT CORPORATION, Redmond, Washington 98052-6399 (US)
(72) Inventor: Wang, Jian, Redmond, WA 98052-6399 (US); Li, Chao, Redmond, WA 98052-6399 (US); Li, Yang, Redmond, WA 98052-6399 (US); Wang, Lifeng, Redmond, WA 98052-6399 (US)
(74) Representative: Grünecker, Kinkeldey, Stockmair & Schwanhäusser

(57) **Abstract**

Detailed herein is a technology which allows a source computer (300) to display image data on a destination computer's (350) display (360). In one approach to the technology, a method of sharing a monitor across a network is described. This method involves retrieving graphics information (210) from a display driver on the source computer. This graphics information is compressed (220), and transmitted (230) from the source computer to the destination computer. The compressed graphics information is then decompressed (240), and displayed (250) on the destination display attached to the destination computer.

## Description

### Background

Within a computer network, it is often useful if multiple computers can share various resources. For example, computers may make portions of their storage space available to other systems on the network, or a printer connected to one computer may be usable by other computers as well. This ability to share resources reduces the costs associated with a network, in that there is less need for multiple redundant systems. Moreover, allowing joint use of resources can improve collaborative efforts as well.

Generally, approaches to sharing system resources across a network follow one of two paths. One approach is to use a hardware-based solution, where the resource itself is constructed to allow multiple computers to make use of it. Examples of this hardware-oriented approach include networked printers and network attached storage devices, where a specialized piece of hardware is specifically configured to be accessible to multiple systems over the network. Another approach is to use a software-based solution, where a dedicated resource is made available to other systems on the network, through the configuration of its host system. Analogs of the examples given above exist in this software-oriented approach, e.g., the ability to share portions of a desktop computer's hard drive, or to allow other computers to access a printer connected directly to a host system.

### Summary

Detailed herein is a technology which, among other things, allows a source computer to display image data on a destination computer's display. In one approach to the technology, a method of sharing a monitor across a network is described. This method involves retrieving graphics information from a display driver on the source computer. This graphics information is compressed, and transmitted from the source computer to the destination computer. The compressed graphics information is then decompressed, and displayed on the destination display attached to the destination computer.

In another approach to the technology, a system for transmitting graphics data from a source computer to a destination computer is described. The system includes an operating system, operating on the source computer, which controls the source computer. A user application, operating under the operating system, is configured to retrieve graphical information from a device driver. The user application is also configured to compress the graphical information, and to transmit the compressed graphical information over a network interface to the destination computer.

Another approach to the technology is described in which graphical data is requested from a display driver. The graphical data is received and compressed. The compressed graphical data is then transmitted.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### Brief Description of the Figures

The accompanying drawings, which are incorporated in and form a part of this specification, illustrate embodiments and, together with the description, serve to explain the principles of the claimed subject matter:

Figure 1 is a block diagram of an exemplary computing system upon which embodiments may be implemented.

Figure 2 is a flowchart of a method of sharing monitors across a network, in accordance with one embodiment.

Figure 3 is a depiction of a computer network, in accordance with one embodiment.

Figure 4 is a representation of the programmatic layers of a computer system, in accordance with one embodiment.

Figure 5 is a depiction of the interaction between a source computer and a destination computer, in accordance with one embodiment.

Figure 6A is a flowchart of a method of transmitting graphical data, in accordance with one embodiment.

Figure 6B is a flowchart of a method of displaying graphical data received from a source computer, in accordance with one embodiment.

### Detailed Description

Reference will now be made in detail to several embodiments. While the subject matter will be described in conjunction with the alternative embodiments, it will be understood that they are not intended to limit the claimed subject matter to these embodiments. On the contrary, the claimed subject matter is intended to cover alternative, modifications, and equivalents, which may be included within the spirit and scope of the claimed subject matter as defined by the appended claims.

Furthermore, in the following detailed description, numerous specific details are set forth in order to provide a thorough understanding of the claimed subject matter. However, it will be recognized by one skilled in the art that embodiments may be practiced without these specific details or with equivalents thereof. In other instances, well-known methods, procedures, components, and circuits have not been described in detail as not to unnecessarily obscure aspects and features of the subject matter.

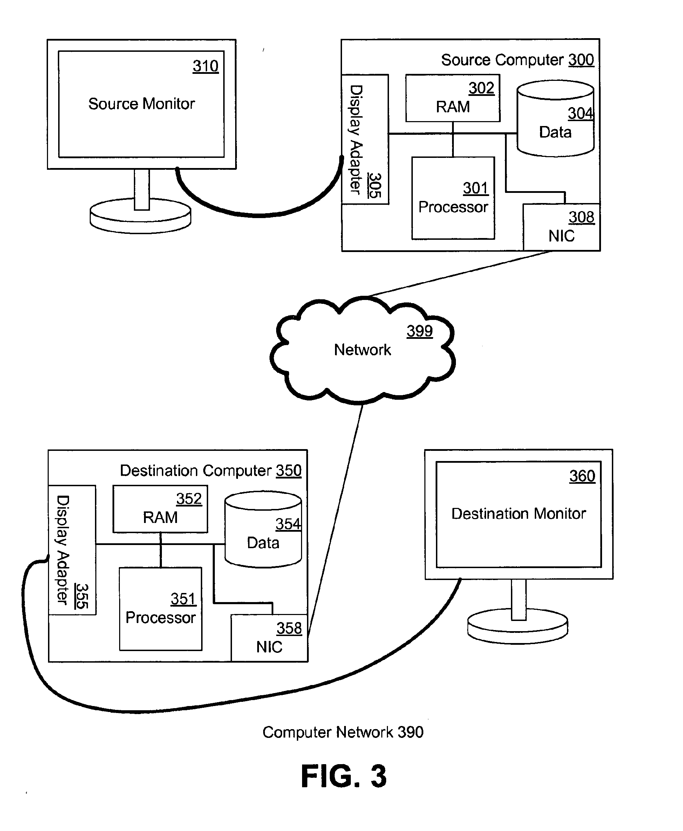

Portions of the detailed description that follows are presented and discussed in terms of a method. Although steps and sequencing thereof are disclosed in a figure herein (e.g., Figure 3) describing the operations of this method, such steps and sequencing are exemplary. Embodiments are well suited to performing various other steps or variations of the steps recited in the flowchart of the figure herein, and in a sequence other than that depicted and described herein.

Some portions of the detailed description are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer-executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout, discussions utilizing terms such as "accessing," "writing," "including," "storing," "transmitting," "traversing," "associating," "identifying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Computing devices, such as computing system 112, typically include at least some form of computer readable media. Computer readable media can be any available media that can be accessed by a computing device. By way of example, and not limitation, computer readable medium may comprise computer storage media and communication media. Computer storage media includes volatile and nonvolatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other medium which can be used to store the desired information and which can be accessed by a computing device. Communication media typically embodies computer readable instructions, data structures, program modules, or other data in a modulated data signals such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer readable media.

Some embodiments may be described in the general context of computer-executable instructions, such as program modules, executed by one or more computers or other devices. Generally, program modules include routines, programs, objects, components, data structures, etc. that perform particular tasks or implement particular abstract data types. Typically the functionality of the program modules may be combined or distributed as desired in various embodiments.

### BASIC COMPUTING DEVICE

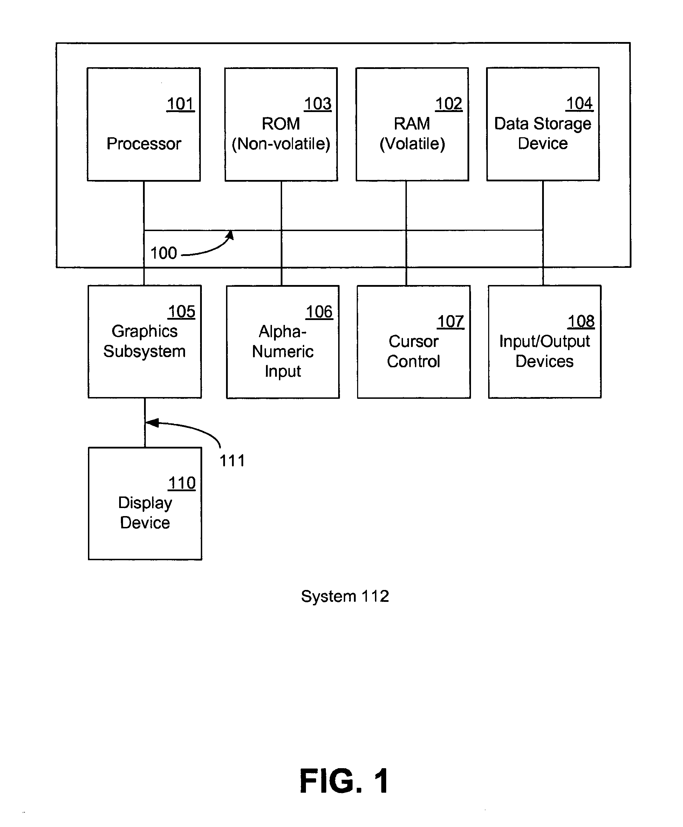

Referring now to Figure 1, a block diagram of an exemplary computer system 112 is shown. It is appreciated that computer system 112 described herein illustrates an exemplary configuration of an operational platform upon which embodiments may be implemented to advantage. Nevertheless, other computer systems with differing configurations can also be used in place of computer system 112 within the scope of the present invention. That is, computer system 112 can include elements other than those described in conjunction with Figure 1. Moreover, embodiments may be practiced on any system which can be configured to enable it, not just computer systems like computer system 112. It is understood that embodiments can be practiced on many different types of computer system 112. Examples include, but are not limited to, desktop computers, workstations, servers, media servers, laptops, gaming consoles, digital televisions, PVRs, and personal digital assistants (PDAs), as well as other electronic devices with computing and data storage capabilities, such as wireless telephones, media center computers, digital video recorders, digital cameras, and digital audio playback or recording devices.

With reference to Figure 1, an exemplary system for implementing embodiments includes a general purpose computing system environment, such as computing system 112. In its most basic configuration, computing system 112 typically includes at least one processing unit 101 and memory, and an address/data bus 100 (or other interface) for communicating information. Depending on the exact configuration and type of computing system environment, memory may be volatile (such as RAM 102), non-volatile (such as ROM 103, flash memory, etc.) or some combination of the two. Computer system 112 may also comprise an optional graphics subsystem 105 for presenting information to the computer user, e.g., by displaying information on an attached display device 110, connected by a video cable 111. Additionally, computing system 112 may also have additional features/functionality. For example, computing system 112 may also include additional storage (removable and/or non-removable) including, but not limited to, magnetic or optical disks or tape. Such additional storage is illustrated in Figure 1 by data storage device 104. Computer storage media includes volatile and nonvolatile, removable and non-removable media implemented in any method or technology for storage of information such as computer readable instructions, data structures, program modules or other data. RAM 102, ROM 103, and data storage device 104 are all examples of computer storage media.

Computer system 112 also comprises an optional alphanumeric input device 106, an optional cursor control or directing device 107, and one or more signal communication interfaces (input/output devices, e.g., a network interface card) 108. Optional alphanumeric input device 106 can communicate information and command selections to central processor 101. Optional cursor control or directing device 107 is coupled to bus 100 for communicating user input information and command selections to central processor 101. Signal communication interface (input/output device) 108, which is also coupled to bus 100, can be a serial port. Communication interface 108 may also include wireless communication mechanisms. Using communication interface 108, computer system 112 can be communicatively coupled to other computer systems over a communication network such as the Internet or an intranet (e.g., a local area network), or can receive data (e.g., a digital television signal).

### SOFTWARE MONITOR SHARING

While many devices in a network are able to be shared, either through hardware or software approaches, monitors and other displays tend to be dedicated devices. Several distinct hardware exceptions exist to this general rule. For example, a single computer may make use of multiple monitors, through the use of multiple hardware display adapters (or a single display adapter with multiple hardware heads). In such a scenario, that single computer has multiple dedicated monitors, and may display different information across all of them, an approach described as an "expanded" or "spanning" view, or may duplicate information that appears on one of them on another, an approach described as "cloning." In order for multiple computers to share a single monitor, some sort of hardware switch is utilized. Such switches commonly appear in one of two forms, either a dedicated and separate device, e.g., a keyboard, video, mouse (KVM) switch, or else integrated into the monitor itself, e.g., a selection switch that allows for input to the monitor to come from several different sources.

In the following embodiments, approaches are described for software that allows one computer system to output display information to another system's attached monitor. These embodiments offer a range of possible advantages. For example, the originating, or source, computer can duplicate its current display information, and transmit it to the receiving, or destination, computer. In this way, for example, collaborative efforts can be significantly aided. Alternatively, in some embodiments, the source computer can make use of the destination computer's monitor, in order to provide additional display area. In some embodiments, it may be useful for the source computer to display information on the destination computer's monitor, if the destination computer's monitor is in some way more desirable, e.g., the destination computer's "monitor" is a projection system suitable for presentations.

### SHARING MONITORS ACROSS A NETWORK

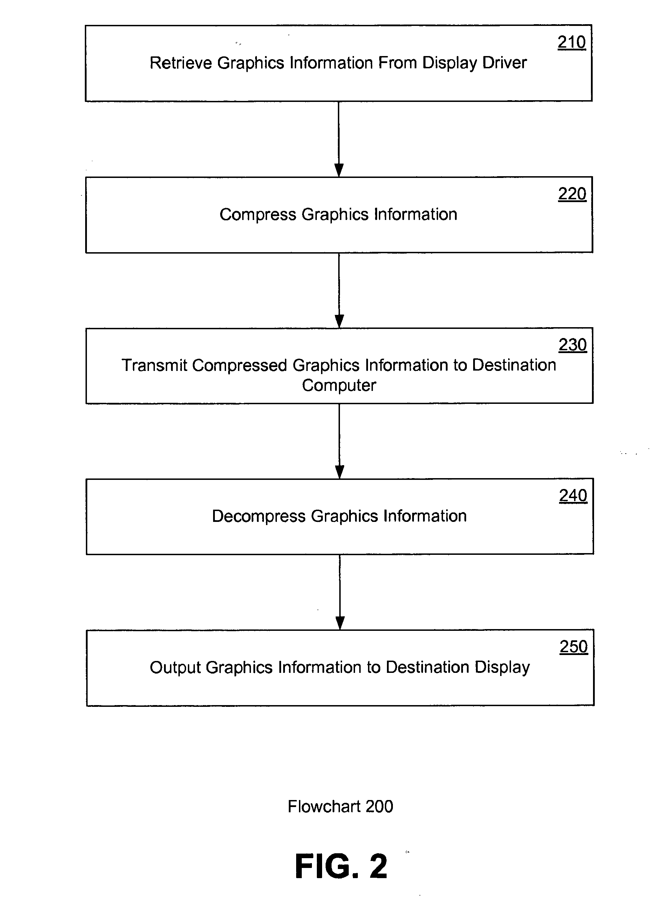

With reference now to Figure 2, a flowchart 200 of a method of sharing monitors across a network is depicted, in accordance with one embodiment. Although specific steps are disclosed in flowchart 200, such steps are exemplary. That is, embodiments of the present invention are well suited to performing various other (additional) steps or variations of the steps recited in flowchart 200. It is appreciated that the steps in flowchart 200 may be performed in an order different than presented, and that not all of the steps in flowchart 200 may be performed.

With reference now to step 210, display information is retrieved from a display driver. As explained in greater detail below, the nature of this display information can vary, across different embodiments. Moreover, the display driver can vary, across different embodiments. In the depicted embodiment, in order for a source computer to display information on a destination computer's monitor, graphical information, or frame data, is initially generated by the source computer. In other embodiments, unrendered information is transmitted to the destination computer, and the destination computer will construct the frame data.

With reference to step 220, the retrieved display information is compressed. In different embodiments, different compression approaches are utilized. In some embodiments, the selection of which compression approach to utilize can depend upon various factors. In one embodiment, for example, a lossless compression technique, such as run length coding (RLC), is utilized, if the network connection between the source and the destination computer offers adequate bandwidth to transmit data compressed in this manner. In some embodiments, lossless compression may be utilized in lower bandwidth situations, e.g., a wireless connection between the source and destination computers. In one such embodiment, several lossless compression techniques may be combined to further compress the display information, e.g., RLC followed by deflated compression. In another embodiment, a lossy compression technique is utilized, in order to reduce the bandwidth requirements for transmission between the source computer in the destination computer.

With reference to step 230, the compressed display information is transmitted from the source computer to the destination computer. In some embodiments, this transmission is accomplished utilizing a streaming approach, where packets which make up the compressed display information are continuously transmitted over the network connection between the source computer in the destination computer. In such embodiments, the destination computer's monitor can be used to display the current activity of the source computer, as the activity occurs.

In one such embodiment, differences between "frames" on the source computer are transmitted, rather than complete frame data. In this embodiment, requirements for network bandwidth are reduced; less information is required to follow the changes occurring on a display, than to resend the entire display image for every frame.

With reference to step 240, the compressed display information is decompressed by the destination computer. As with step 220, the decompression approaches utilized can vary, across different embodiments.

With reference to step 250, decompressed graphics data is output to the destination computer's display.

In the following embodiments, exemplary implementations of the above described method are explored in greater detail.

### COMPUTER NETWORK

With reference now to Figure 3, a computer network 390 is depicted, in accordance with one embodiment. While computer network 390 is shown as incorporating specific, enumerated features and elements, it is understood that embodiments are well suited to applications involving different, fewer, or additional elements, configurations, and/or features.

Computer network 390 is shown as including source computer 300 and destination computer 350, which are communicatively coupled by a network 399. Source computer 300 includes a processor 301, memory 302, data storage device 304, graphics adapter 305, and a network interface card (NIC) 308; source monitor 310 is connected to source computer 300 via graphics adapter 305. Source computer 300 is connected to network 399 via NIC 308. Destination computer 350, in the depicted embodiment, similarly includes processor 351, memory 352, data storage device 354, graphics adapter 355, and network interface card 358; destination monitor 360 is connected to destination computer via graphics adapter 355. Destination computer 350 is connected to network 399 via NIC 358.

### DISPLAY MODES

In different embodiments, different types of display modes are supported. For example, in one embodiment, a source computer and a destination computer are configured in a manner that allows the display of the source computer to the duplicated, or "cloned," on the display of the destination computer. For example, with reference to Figure 3, a picture appearing on source monitor 310 may also appear on destination monitor 360.

In another embodiment, the destination display may serve as an extension of the source display. For example, an image too large to fit on source monitor 310 may "span" across both source monitor 310 and destination monitor 360, allowing the image to be fully displayed, even in situations where neither monitor is sufficiently large to display the image by itself.

In another embodiment, graphics data transmitted to the destination display may be larger than the destination display can display. For example, if the resolution of destination monitor 360 is limited to 1280x1024 pixels, and the graphics data in transmitted from source computer 300 is 1600x1200 pixels, not all of the graphics data will be able to be completely displayed on destination monitor 360 simultaneously. This scenario may arise in the clone, span, or any other display scenario. In this embodiment, the destination computer, e.g., a user application running on the destination computer and receiving the compressed graphics information, can be configured to allow the image to be panned, such that those portions of the graphics information which do not presently appear on the destination display can be viewed by interacting with the computer, e.g., by using the keyboard or mouse to move the image around the screen.

### KERNEL SPACE AND USER SPACE

In some embodiments, some of the steps, or portions of the steps, described above in the flowchart 200 are implemented by software resident in different portions of the operating system of the source and/or destination computers. For example, in one embodiment, a virtual device driver, resident on the source computer in the kernel space portion of the operating system, is used to generate the graphical data, while an application, resident in the user space portion of the operating system, is responsible for the compression and transmission of the graphical data.

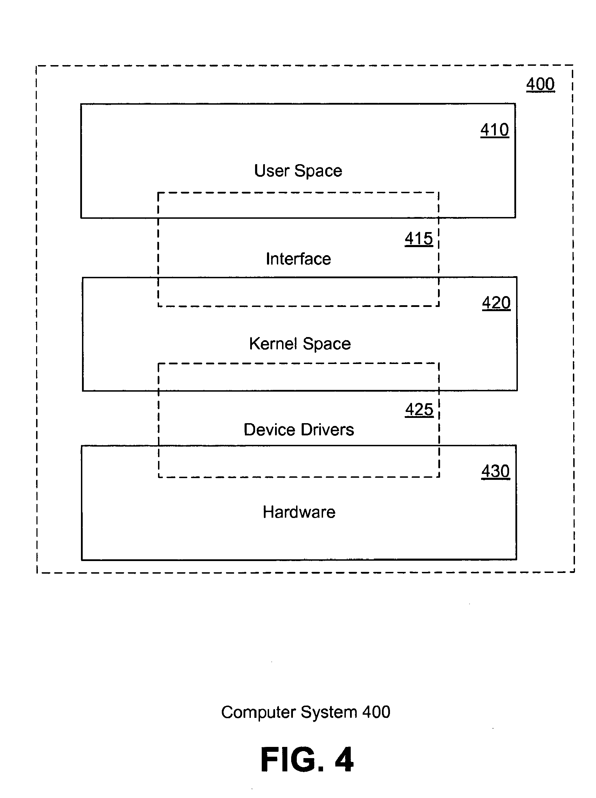

With reference now Figure 4, a representation of the programmatic layers of a computer system 400 are presented, in accordance with one embodiment. While Figure 4 depicts certain, specific enumerated features and elements, it is understood that embodiments are well suited to applications with additional, fewer, or different features, arrangements, or elements.

As depicted in Figure 4, computer system 400 can be envisioned as being made up of layers of increasing abstraction. The bottommost layer, shown here as hardware layer 430, consists of the actual electronic components that make up the computer system, e.g., processor 301, memory 302, or graphics adapter 305.

Moving one layer up from hardware layer 430, Figure 4 shows kernel space 420. Interaction between kernel space 420 and hardware layer 430, in some embodiments, is achieved by the operation of one or more specific pieces of software, e.g., device drivers, shown here as device drivers 425. Further, in some embodiments, a device driver may be used to mimic functionality of hardware, even if the hardware is not present in computer system 400. For example, as described in greater detail below, a virtual device driver may be used to simulate the functionality of a graphics adapter not present in the source computer system.

The uppermost layer, shown here as user space 410, interacts with kernel space 420 by means of an interface 415. Interface 415 exposes functions and services available through the kernel to applications running in user space 410.

### TRANSMITTING GRAPHICS DATA FROM A SOURCE COMPUTER TO A DESTINATION COMPUTER

In some embodiments, the method of flowchart 200 is implemented through the actions of several pieces of software. In one such embodiment, the source computer contains a source user application, e.g., running in user space 410, and a specialized device driver, e.g., residing in kernel space 420; the destination computer, meanwhile, contains a destination user application. In such an embodiment, the specialized device driver provides the graphics information to be displayed on the destination display, which the source user application takes, compresses, and transmits to the destination computer, where the destination user application decompress it, and causes it to be displayed on the destination monitor.

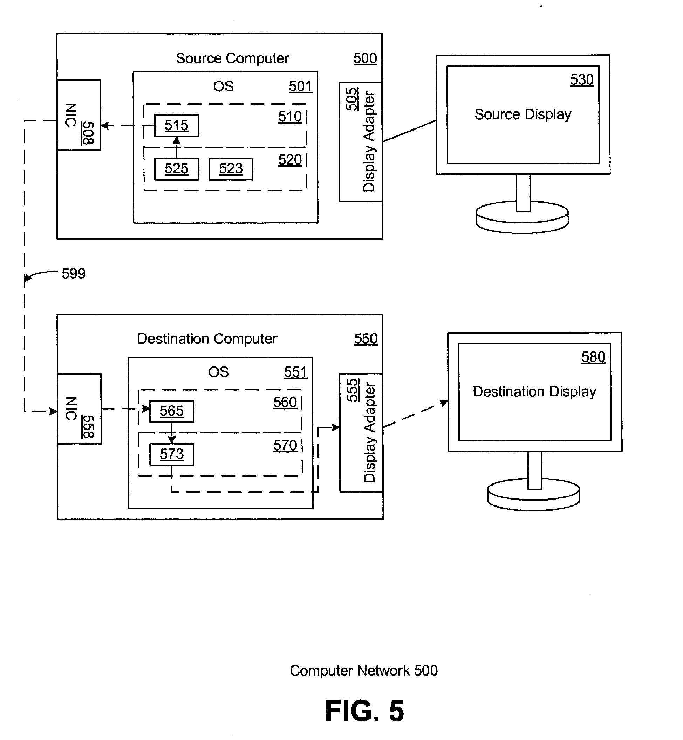

With reference now to Figure 5, a computer network 590 is depicted, in accordance with one embodiment. While Figure 5 depicts certain, specific enumerated features and elements, it is understood that embodiments are well suited to applications with additional, fewer, or different features, arrangements, or elements.

Figure 5 depicts the interaction between a source computer 500 and a destination computer 550. Source computer 500 is shown here as including an operating system 501, which is subdivided into user space 510 and kernel space 520. Source computer 500 is also shown as including display adapter 505, which is connected to source monitor 530. Source computer 500 also includes network adapter 508, which communicatively couples source computer 500 with destination computer 550, by means of network connection 599.

In the depicted embodiment, kernel space 520 includes two device drivers: video driver 523 and specialized device driver 525. As shown, video driver 523 allows source computer 500 to display information on source monitor 530. Specialized device driver 525, meanwhile, is used to display information on destination monitor 580. The operation and functionality of specialized device driver 525 may vary, across different embodiments. In one embodiment, for example, specialized device driver 525 is a "mirror" device driver. In this embodiment, specialized device driver 525 is used to duplicate ("mirror" or "clone") the graphics data generated by video driver 523 and displayed on source monitor 530. In another embodiment, specialized device driver 525 is a virtual device driver. In such an embodiment, specialized device driver 525 is used to generate different graphics data than that generated by video driver 523, e.g., for an extended or "spanning" mode.

In one particular embodiment, a virtual device driver is implemented by making use of generic graphics device interface (GDI) functions available through the source computer's operating system. Ordinarily, a display device driver will implement specific predefined drawing functions, e.g., functions associated with a standardized set of image rendering requirements. In one embodiment, the operating system provides generic implementations for this standardized set of drawing functions; the virtual device driver invokes these GDI functions to generate image data.

In the depicted embodiment, a user application 515 is running on computer 500, in user space 510. In this embodiment, user application 515 performs three functions. First, user application 515 accesses specialized device driver 525, and retrieves the graphical data to be displayed on the destination display. Second, user application 515 performs any compression or encryption necessary for transmitting the graphical data to the destination computer. In some embodiments, e.g., where user application 515 selects a compression technique suitable for the bandwidth available between source computer 500 and destination computer 550, user application 515 includes a module for detecting available bandwidth. Third, in the depicted embodiment, user application 515 causes the (compressed) graphical data to be transmitted to the destination computer.

Destination computer 550 is shown as including an operating system 551, which is subdivided into user space 560 and kernel space 570. Destination computer 550 is also shown as including display adapter 555, which is connected to destination monitor 580. Destination computer 550 also includes network adapter 558, which communicatively couples destination computer 550 with source computer 500, by means of network connection 599.

Kernel space 570 is shown as including a video driver 573. Video driver 573 is used by destination computer 550 to display information on destination monitor 580, by passing it through display adapter 555.

User space 560 is shown as including user application 565. In this embodiment, user application 565 performs three functions. First, user application 565 receives (compressed) graphical data from source computer 500, which was transmitted by user application 515. Second, user application 565 performs any decompression or decryption necessary. Finally, user application 565 causes the graphical data received from source computer 550 to be displayed, e.g., by passing it to video driver 573 to be output to display adapter 555, and thereby displayed on destination monitor 580.

In some embodiments, user application 515 and user application 565 may be identical applications, e.g., a single user application is configured to allow a particular computer to be a source computer and/or a destination computer. In one such embodiment, destination computer 550 may also include a specialized device driver, analogous to specialized device driver 525.

In some embodiments, the destination computer may have multiple displays and/or display adapters available. In one such embodiment, user application 565 is configured to allow selection between the displays available on destination computer 550.

### INTERACTION BETWEEN A USER SPACE APPLICATION AND A KERNEL SPACE DEVICE DRIVER

In some embodiments, an efficiency advantage is available, by optimizing the transfer of graphical data between the specialized device driver and the user space application on the source computer. Traditionally, information passed from a device driver (or other kernel space feature) to a user space application passes through an interface, e.g., interface 415. During this process, the user space application, e.g., user space application 515, requests data from the kernel space driver, e.g., specialized device driver 525. This request includes a pointer to a memory buffer available to the user space application, where the requested data may be stored. The kernel interface, in turn, will retrieve the requested information from the device driver, and copy it to a temporary buffer. From the temporary buffer, the requested information will then be copied to the user application's specified memory buffer.

In some embodiments, the user application and the specialized device driver are configured to bypass the normal double copying approach. In one such embodiment, the user application passes the desired memory buffer address directly to the specialized device driver, which then copies the requested graphical data directly to that specified memory buffer. In this way, the graphical information is only copied once, which reduces the amount of memory access required, and accordingly speeds the operation. In one embodiment, the user application and/or specialized device driver are configured such that, if a problem occurs during the direct copying process, e.g., a memory exception occurs, the traditional two-copy process is used instead.

### METHOD OF TRANSMITTING GRAPHICAL DATA

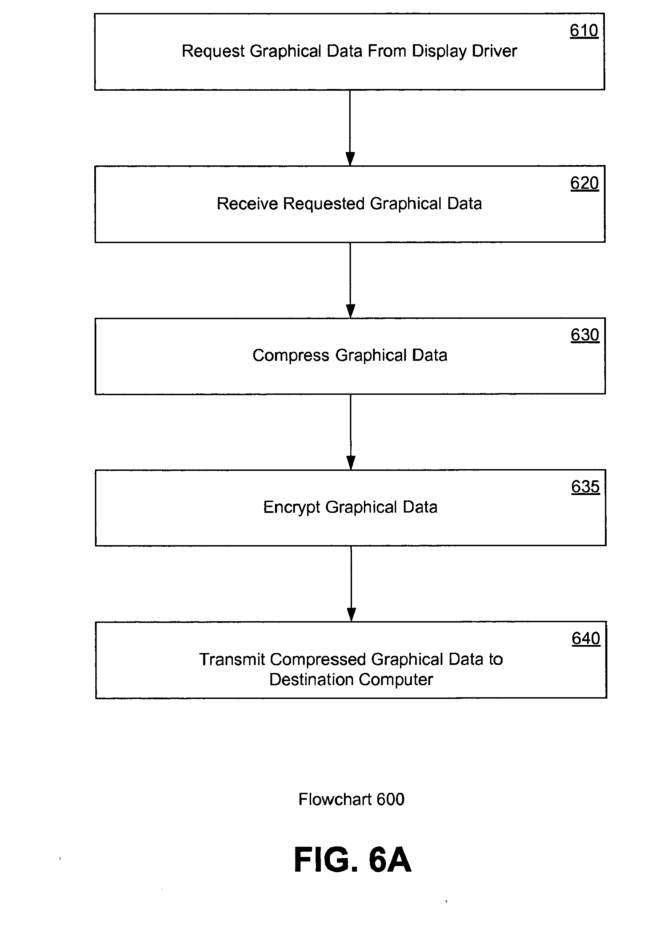

With reference now to Figure 6A, a flowchart 600 of a method of transmitting graphical data is presented, in accordance with one embodiment. Although specific steps are disclosed in flowchart 600, such steps are exemplary. That is, embodiments of the present invention are well suited to performing various other (additional) steps or variations of the steps recited in flowchart 600. It is appreciated that the steps in flowchart 600 may be performed in an order different than presented, and that not all of the steps in flowchart 600 may be performed.

With reference now to step 610, graphical data is requested from a display driver. In some embodiments, this request will include a memory address, in which to store the requested graphical data. In one embodiment, a user application may pass the request directly to the display driver. In another embodiment, the user application may pass the request to a kernel interface, which in turn will request the graphical data from the display driver, and store it at the specified memory address. In some embodiments, the display driver is a virtual display driver. In other embodiments, the display driver is a "mirror" display driver. In other embodiments, the display driver may be configured in different ways.

For example, with reference to Figure 5, user application 515 requests graphical data from specialized device driver 525, and includes a pointer to a buffer in which to store the graphical data.

With reference now to step 620, the requested graphical data is received. In some embodiments, the display driver is configured to copy the requested graphical data directly to the indicated memory location, accessible by the user application. In other embodiments, a kernel interface will obtain the requested graphical data from the display driver, and write the data to the indicated memory location. In other embodiments, other approaches are utilized.

Continuing the above example, specialized device driver 525 copies the requested graphical data to the indicated buffer. The user application 515 reads the graphical data from the buffer.

With reference now to step 630, the graphical data is compressed. In some embodiments, the user application compresses the graphical data. In different embodiments, as mentioned above, different compression techniques can be utilized to compress the graphical data. In one such embodiment, the graphical data is compressed with reference to the available bandwidth between the source computer and the destination computer, e.g., different compression techniques can be used in a high-bandwidth situation, as opposed to those used in low bandwidth situations.

Continuing the above example, user application 515 compresses the graphical data. The compression technique utilized is selected with reference to the bandwidth of network connection 599, which connects source computer 500 with destination computer 550. If network connection 599 is a high-bandwidth connection, a lossless compression technique, such as RLC compression, can be utilized. If network connection 599 is a low bandwidth connection, e.g., a wireless connection, other lossless compression techniques, such as RLC compression followed by deflated compression, or a lossy compression technique, can be utilized.

With reference now to step 635, in some embodiments, the graphical data is encrypted. In some embodiments, the user application encrypts the graphical data, in order to help secure the graphical data from unauthorized viewers. In some embodiments, encryption follows compression. In other embodiments, encryption is performed before compression.

Continuing the above example, user application 515 encrypts the compressed graphical data.

With reference now to step 640, the compressed graphical data is transmitted to the destination computer. In some embodiments, the user application uses the source computer's network connection to transmit the compressed graphical data to the destination computer.

Continuing the above example, user application 515 uses network adapter 508 to transmit the encrypted graphical data over network connection 599 to destination computer 550.

### METHOD OF DISPLAYING GRAPHICAL DATA RECEIVED FROM A SOURCE COMPUTER

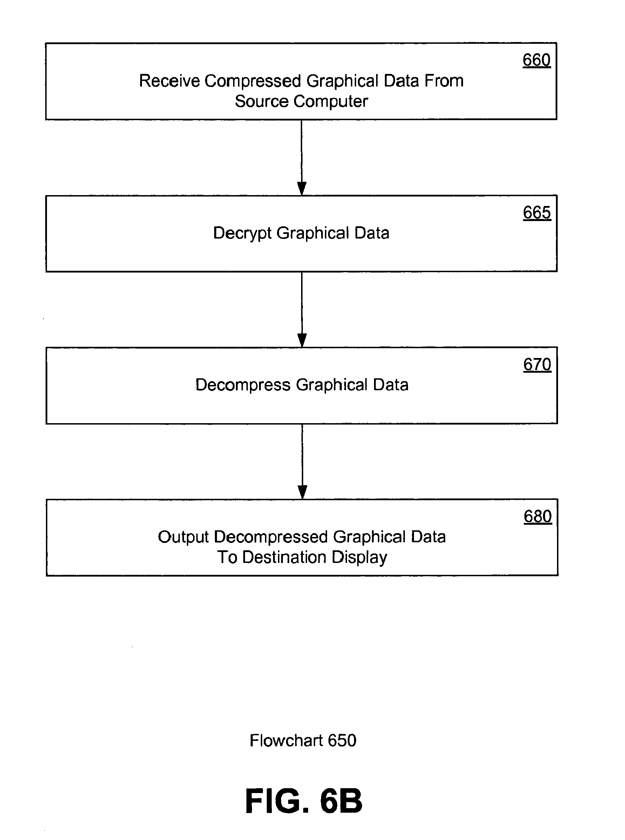

With reference now to Figure 6B, a flowchart 650 of a method of displaying graphical data received from a source computer is depicted, in accordance with one embodiment. Although specific steps are disclosed in flowchart 650, such steps are exemplary. That is, embodiments of the present invention are well suited to performing various other (additional) steps or variations of the steps recited in flowchart 650. It is appreciated that the steps in flowchart 650 may be performed in an order different than presented, and that not all of the steps in flowchart 650 may be performed.

In step 660, compressed graphical data is received from a source computer. In some embodiments, a user application running on the destination computer receives compressed graphical data from a user application running on the source computer. In other embodiments, other sources of graphical data may be utilized.

For example, with reference to Figure 5, user application 565, running on destination computer 550, receives compressed graphical data from source computer 500. The compressed graphical data was transmitted by user application 515, over network connection 599.

In step 665, in some embodiments, the graphical data is decrypted. In some embodiments, where graphical data is encrypted before it is transmitted from the source computer to the destination computer, it is necessary for the user application on the destination computer to decrypt the encrypted graphical data. In some embodiments, decryption may occur after decompression. In some embodiments, decryption occurs before decompression of the graphical data. In different embodiments, different decryption techniques are utilized, as appropriate for the encryption technique used.

In step 670, the compressed graphical data is decompressed. In some embodiments, the receiving user application on the destination computer decompresses the compressed graphical data received from the source computer. In different embodiments, as above, the methods used to decompress the compressed graphical data will vary. For example, if RLC encoding was used to compress the graphical data, the user application will need to utilize an appropriate decompression technique.

Continuing the above example, user application 565 decompresses the compressed graphical data received from user application 515, using an appropriate technique.

In step 680, the decompressed graphical data is output to the destination computer's display. In some embodiments, the user application causes the decompressed (and decrypted) graphical data to be displayed on the destination computer's monitor, or other display. In one such embodiment, the user application passes the decompressed graphical data to the display driver for the destination computer's display adapter.

Continuing the above example, user application 565 passes the decompressed graphical data to video driver 573, for output to display adapter 555 and display on destination monitor 580.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

### The following is a list of further preferred embodiments of the invention:

Embodiment 1: A method of sharing a monitor across a network, comprising:
   retrieving graphics information from a display driver on a source computer;
   compressing said graphics information, to produce compressed graphics information;
   transmitting said compressed graphics information from said source computer to a destination computer;
   decompressing said compressed graphics information, to produce decompressed graphics information; and
   displaying said decompressed graphics information on a destination display coupled to said destination computer.
Embodiment 2: The method of embodiment 1, further comprising:
   encrypting said graphics information before said transmitting.
Embodiment 3: The method of embodiment 1, wherein said display driver comprises a virtual display driver.
Embodiment 4: The method of embodiment 1, wherein said display driver comprises a mirror display driver.
Embodiment 5: The method of embodiment 1, wherein said graphics information comprises duplicate image data for reproducing an image displayed on a display coupled to said source computer.
Embodiment 6: The method of embodiment 1, wherein said graphics information comprises extended image data.
Embodiment 7: The method of embodiment 1, wherein said graphics information comprises a stream of image data.
Embodiment 8: The method of embodiment 7, wherein said stream of image data comprises changes between a preceding image frame and a current image frame.
Embodiment 9: A system for transmitting graphics data from a source computer to a destination computer, comprising:
   an operating system, operating on said source computer, for controlling said source computer;
   a user application, operating on said operating system; and
   a network interface, controlled by said operating system, for transmitting information, wherein said user application is configured to retrieve graphical information from a device driver, is further configured to compress said graphical information, and is further configured to transmit compressed graphical information over said network interface to said destination computer.
Embodiment 10: The system of embodiment 9, wherein said user application is further configured to determine a bandwidth over said network interface between said source computer and said destination computer.
Embodiment 11: The system of embodiment 10, wherein said user application is configured to select between a plurality of compression techniques, with reference to said bandwidth between said source computer and said destination computer.
Embodiment 12: The system of embodiment 9, wherein said user application is further configured to encrypt said graphical information.
Embodiment 13: The system of embodiment 9, wherein said device driver comprises a virtual display driver operating in a kernel space of said operating system.
Embodiment 14: The system of embodiment 9, wherein said device driver comprises a mirror display driver operating in a kernel space of said operating system.
Embodiment 15: The system of embodiment 9, wherein said user application is configured to retrieve said graphical information from said device driver by transmitting a request to said device driver, said request comprising a memory address, and reading said graphical information from said memory address.
Embodiment 16: The system of embodiment 15, wherein said device driver is configured to write said graphical information directly to said memory address.
Embodiment 17: A computer-readable medium having computer executable instructions for performing steps comprising:
   requesting graphical data from a display driver;
   receiving said graphical data;
   compressing said graphical data to produce compressed graphical data; and
   transmitting said compressed graphical data.
Embodiment 18: The computer-readable medium of embodiment 17, further comprising:
   encrypting said graphical data.
Embodiment 19: The computer-readable medium of embodiment 17, further comprising:
   receiving said compressed graphical data;
   decompressing said compressed graphical data to produce decompressed graphical data; and
   outputting said decompressed graphical data to a destination display.
Embodiment 20: The computer-readable medium of embodiment 17, wherein said compressing comprises applying a run length coding (RLC) compression technique to said graphical data.

## Claims

1. A method of sharing a monitor across a network, comprising:
retrieving graphics information from a display driver on a source computer by transmitting a request to said display driver, said request comprising a memory address, and reading said graphics information from said memory address;
compressing said graphics information, to produce compressed graphics information;
transmitting said compressed graphics information from said source computer to a destination computer;
decompressing said compressed graphics information, to produce decompressed graphics information; and
displaying said decompressed graphics information on a destination display coupled to said destination computer.

2. The method of claim 1, further comprising:
encrypting said graphics information before said transmitting.

3. The method of claim 1, wherein said display driver comprises a virtual display driver or mirror display driver.

4. The method of claim 1, wherein said graphics information comprises one or more of:
duplicate image data for reproducing an image displayed on a display coupled to said source computer, extended image data, and a stream of image data comprising changes between a preceding image frame and a current image frame.

5. A system for transmitting graphics data from a source computer to a destination computer, comprising:
an operating system, operating on said source computer, for controlling said source computer;
a user application, operating on said operating system; and
a network interface, controlled by said operating system, for transmitting information,
wherein said user application is configured to retrieve graphical information from a device driver by transmitting a request to said device driver, said request comprising a memory address, and reading said graphical information from said memory address, is further configured to compress said graphical information, and is further configured to transmit compressed graphical information over said network interface to said destination computer.

6. The system of claim 5, wherein said user application is further configured to determine a bandwidth over said network interface between said source computer and said destination computer.

7. The system of claim 6, wherein said user application is configured to select between a plurality of compression techniques, with reference to said bandwidth between said source computer and said destination computer.

8. The system of claim 5, wherein said user application is further configured to encrypt said graphical information.

9. The system of claim 5, wherein said device driver comprises a virtual display driver or a mirror display driver operating in a kernel space of said operating system.

10. The system of claim 5, wherein said device driver is configured to write said graphical information directly to said memory address.

11. A computer-readable medium having computer executable instructions for performing steps comprising:
requesting graphical data from a display driver by transmitting a request to said display driver, said request comprising a memory address;
receiving said graphical data by reading said graphical data from said memory address;
compressing said graphical data to produce compressed graphical data; and
transmitting said compressed graphical data.

12. The computer-readable medium of claim 11, further comprising:
encrypting said graphical data.

13. The computer-readable medium of claim 11, further comprising:
receiving said compressed graphical data;
decompressing said compressed graphical data to produce decompressed graphical data; and
outputting said decompressed graphical data to a destination display.

14. The computer-readable medium of claim 11, wherein said compressing comprises applying a run length coding, RLC, compression technique to said graphical data.
